# EUROPEAN PATENT APPLICATION

(11) **EP 4 269 126 A1**
(43) Date of publication of application: **01.11.2023**
(21) Application number: 23169979.4
(22) Date of filing: 26.04.2023
(51) Int. Cl.: B60B 3/00, B60B 3/04, B60B 3/12

(54) **WHEEL FOR VEHICLES WITH RIBS OF ADDITIVE MATERIAL**

(30) Priority: 27.04.2022 IT 202200008234
(71) Applicant: MW Italia S.r.l., 10098 Rivoli (TO) (IT)
(72) Inventor: PERRIS MAGNETTO, Gabriele, I-10098 RIVOLI (Torino) (IT); BARTOLI, Paolo, I-19025 PORTOVENERE (La Spezia) (IT); GOTTA, Giacomo, I-10081 CASTELLAMONTE (Torino) (IT); ZANOLLI, Emanuele, I-10144 TORINO (IT); RONCO, Davide, I-14019 VILLANOVA D'ASTI (Asti) (IT); GALLIO, Giorgio, I-10126 TORINO (IT)
(74) Representative: Vanzini, Christian

(57) **Abstract**

Wheel (1) for vehicles, comprising a rim (2) of sheet metal, comprising on its axially outer side an outer flange (27), an outer bead seat (26) and a retaining hump (25), as well as a rim well (24) connected to the outer bead seat (26) through the retaining hump (25), and a disc (3) of sheet metal, comprising a cover part (31) and a connection part (32) protruding axially from the cover part (31), wherein the connection part (32) of the disc (3) is fixed to a radially inner surface of the rim (2), wherein at least one formation (41, 42) of additive material is formed on the rim and/or disc, the formation defining a steep thickness change with respect to a surrounding region of sheet metal.

## Description

The present invention relates to a wheel for motor vehicles, comprising a rim of sheet metal and a disc of sheet metal assembled to each other.

The stamping process by which such a wheel is produced requires the sheet metal to have a constant thickness; this alley places a limit on the performance features achievable in the finished product.

An object of the present invention is to provide a device that is able to overcome the limit described above.

Therefore, the subject matter of the invention is a wheel for vehicles, comprising:
a rim of sheet metal, comprising on its axially outer side an outer flange, an outer bead seat, and a retaining hump, as well as a rim well connected to the outer bead seat through the retaining hump, and
a disc of sheet metal, comprising a cover part and a connection part protruding axially from the cover part,
wherein the connection part of the disc is fixed to a radially inner surface of the rim,
wherein at least one formation of metal additive material deposited in a plurality of layers is formed on at least one of said rim and disc, said formation defining a steep thickness change with respect to a surrounding region of sheet metal.

The present invention also relates to a method for producing a wheel for vehicles, comprising the following steps:
providing a rim of sheet metal, comprising on its axially outer side an outer flange, an outer bead seat and a retaining hump, as well as a rim well connected to the outer bead seat through the retaining hump,
providing a disc of sheet metal, comprising a cover part and a connection part projecting axially from the cover part, and
fixing the connection part of the disc to a radially inner surface of the rim,
further comprising
forming at least one formation of metal material on at least one of said rim and disc by additive manufacturing, said formation defining a steep thickness change with respect to a surrounding region of sheet metal.

According to one embodiment, the aforesaid formation may be formed as a rib. It is therefore possible to overcome the limits of the stamping process by inserting a reinforcement only in the necessary regions and thus avoiding increasing the thickness throughout the component (disc or rim). It is thus possible to achieve better performance in terms of fatigue resistance and stiffness without compromising weight.

More generally, the present invention may find application whenever it is necessary to obtain localized formations on the disc and/or rim, formations which would be difficult or even impossible to obtain by the usual processes of stamping or plastic deformation of wheels of sheet metal.

Preferred embodiments of the invention are defined in the dependent claims, which are to be understood as an integral part of the present description.

Features and advantages of the wheel according to the invention will become clearer from the following detailed description of some embodiments of the invention, made with reference to the accompanying drawings, provided purely for illustrative and non-limiting purposes, wherein:
- Fig. 1 and 2 are perspective views of wheels according to the invention;
- Fig. 3 is a sectional view of a detail of the wheel in Fig. 2;
- Fig. 4 is a perspective view of a further wheel according to the invention;
- Fig. 5 is an enlarged scale view of a detail of the wheel in Fig. 4;
- Fig. 6 is a perspective view of a further wheel according to the invention;
- Fig. 7 is a sectional view of a detail of the wheel in Fig. 6; and
- Fig. 8 is a perspective view of a further wheel according to the invention.

In the following description, "axial direction" means a direction parallel to the wheel axis.

The indications "inner" and "outer," with respect to the axial direction, refer to the installation condition of the wheel on the vehicle, where "inner" means "toward the vehicle" and "outer" means "away from the vehicle."

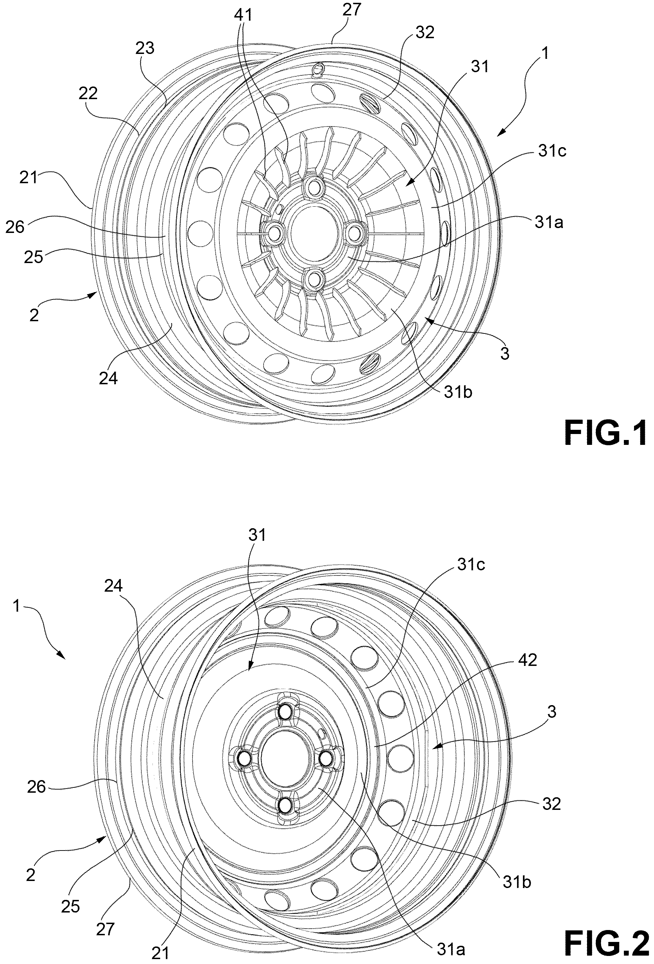

In Fig. 1, a vehicle wheel according to the invention is collectively denoted by 1.

The wheel 1 comprises a rim 2 of sheet metal, e.g., steel or aluminum, and formed, for example, by rolling and welding, and a disc 3 of sheet metal, e.g., steel or aluminum, and formed, for example, by stamping and blanking.

The rim 2 conventionally comprises, in succession along the axial direction from the inside to the outside and connected to each other, an inner flange 21, an inner bead seat 22, an inner retaining hump 23, a rim well 24, an outer retaining hump 25, an outer bead seat 26, and an outer flange 27.

The disc 3 comprises a cover part 31, arranged on the axially outer side of the rim 2, and a peripheral connection part 32, protruding axially inward from the cover part 31 and inserted coaxially inside the rim 2. This peripheral connection part 32 is attached to a radially inner surface of the rim, such as by welding or crimping.

The cover part 31 of the disc 3 comprises a flat central portion 31a intended for connection by bolts to an axle hub (not shown), and a curved profile portion 31b that connects the central portion 31a to the peripheral connection part 32 of the disc. In the example shown, this curved profile portion 31b defines a surface with symmetry of revolution about the central axis of the wheel and is provided with peripheral windows. In other embodiments, the curved profile portion of the disc may have a more complex geometry, such as spoked with large windows between the spokes. However, the geometry of this part is not essential to the invention.

At least one rib of additive material deposited in a plurality of layers (particularly of metal material) is obtained on the rim and/or disc, defining a steep thickness change from a surrounding region of sheet metal. This rib thus defines a localized thickening in well-defined regions. Said at least one rib may extend along any radial, circumferential and/or axial direction of the wheel and may be located on an axially outer surface of the disc, an axially inner surface of the disc, a radially outer surface of the rim, and/or a radially inner surface of the rim.

In the example in Fig. 1, a plurality of ribs 41 is provided formed of additive material extending radially and arranged on an axially outer surface of the disc 3, specifically in the region 31b of the disc 3 comprised between the flat hub mounting part 31a and the peripheral connection part 32. The term "extending radially" means that the ribs have at least one extension component in the radial direction. According to a plan view of the disc, the ribs 41 in the example in Fig. 1 show an extension exactly in the radial direction. According to different embodiments, these ribs could also have an extension component in the tangential/circumferential direction, with possible benefits from an aerodynamic point of view.

In the example in Fig. 2 the same wheel is shown, with a different arrangement of the ribs made of additive material. The same numerical references as in Fig. 1 have therefore been adopted.

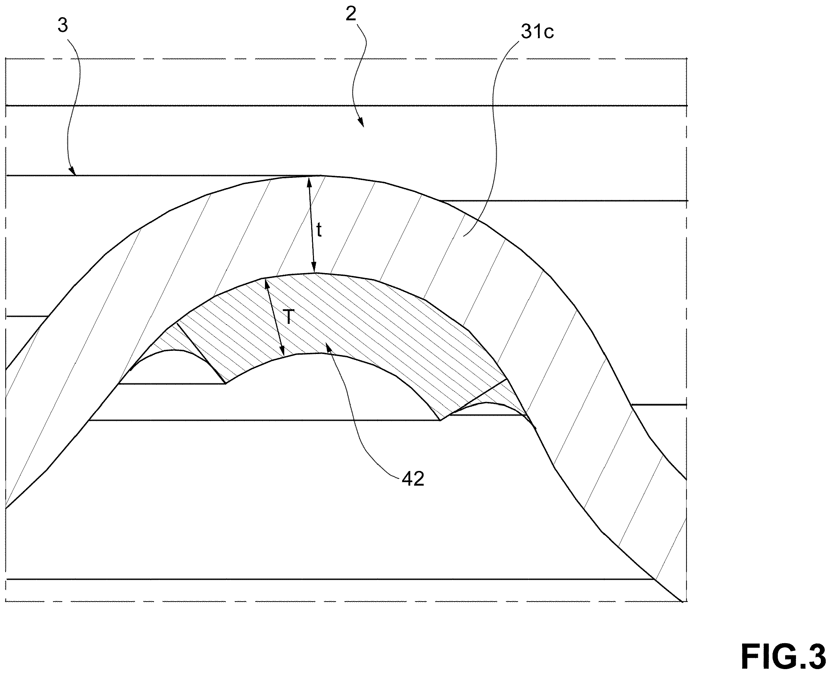

In the example in Fig. 2, a rib 42 is provided, made of additive material, extending circumferentially and arranged on an axially inner surface of the disc 3. The term "extending circumferentially" means that the rib extends along a circumferential arc, which, as in the example shown in Fig. 2, covers an entire circumference, or may be of shorter length. In the example shown, the rib 42 is arranged in a fold region 31c in the region 31b of the disc 3 between the flat hub mounting part 31a and the peripheral connection part 32. At this fold region 31, the radial profile of the disc 3 defines a well in which the rib 42 is arranged. Fig. 3 represents a cross section taken in a radial plane at the rib 42. The nominal thickness of the sheet metal in the fold region 31c is denoted with t, whereas the additional thickness contributed by the rib 42 of additive material is denoted with T.

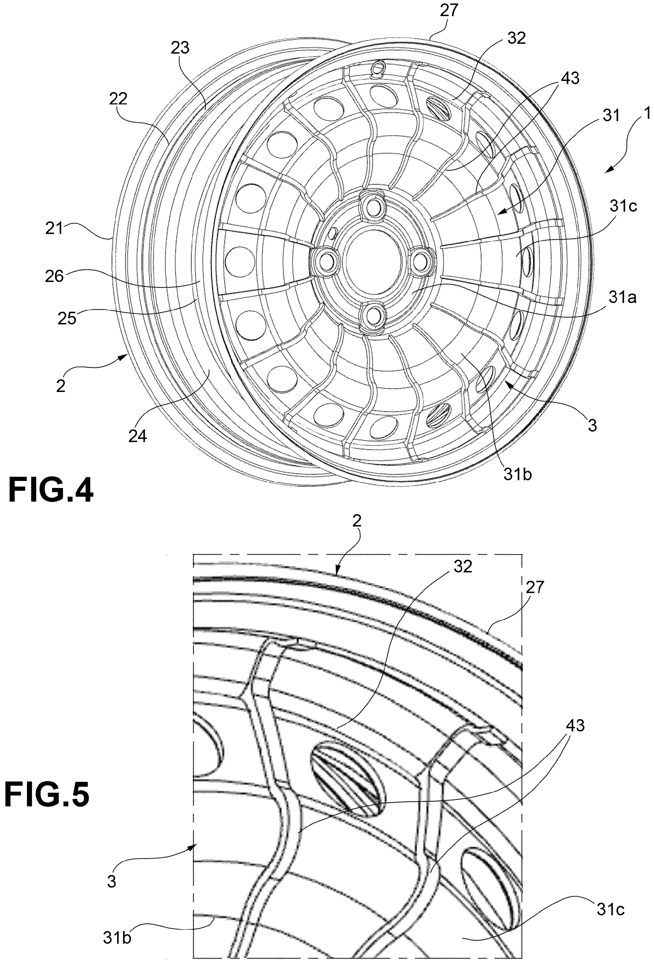

In the example in Fig. 4 and 5 the same wheel is again shown, with a different arrangement of the ribs of additive material. The same numerical references as in the previous figures have therefore been adopted.

In this example, the ribs denoted as 43 are similar to those in Fig. 1, but extend from a region 31b of the disc 3 between the flat hub mounting part 31a and the connection part 32 to a region of the radially inner surface of the rim 2. In this example, the ribs 43 thus extend over both components of the wheel (disc and rim).

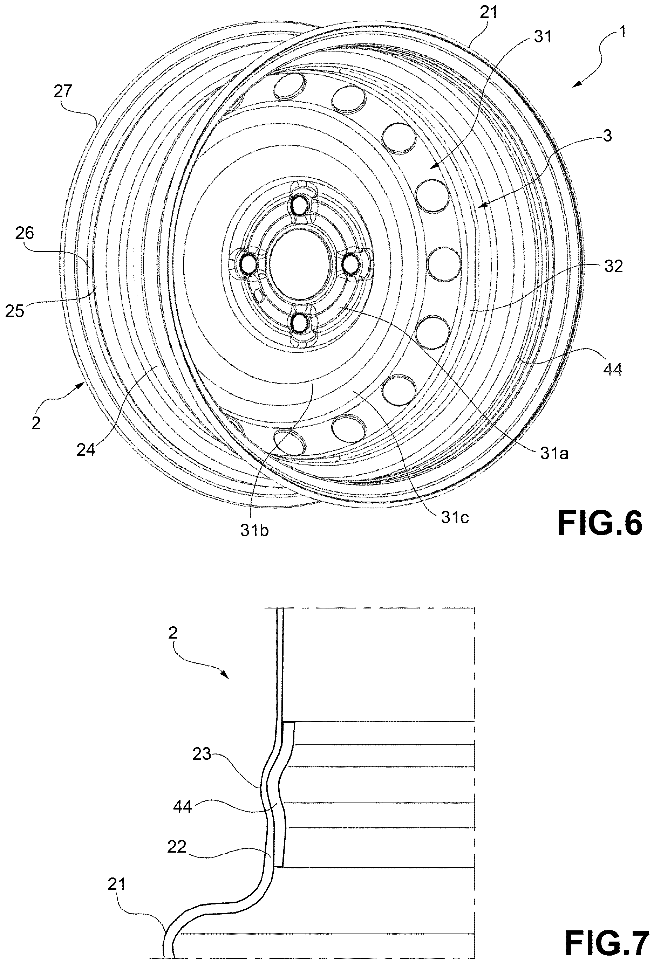

In the example in Fig. 6 and 7 the same wheel is still shown, with a different arrangement of the ribs of additive material. The same numerical references as in the previous figures have therefore been adopted.

In this example, the rib denoted as 44 extends circumferentially over a radially inner surface of the rim 2, specifically at the inner retaining hump 23.

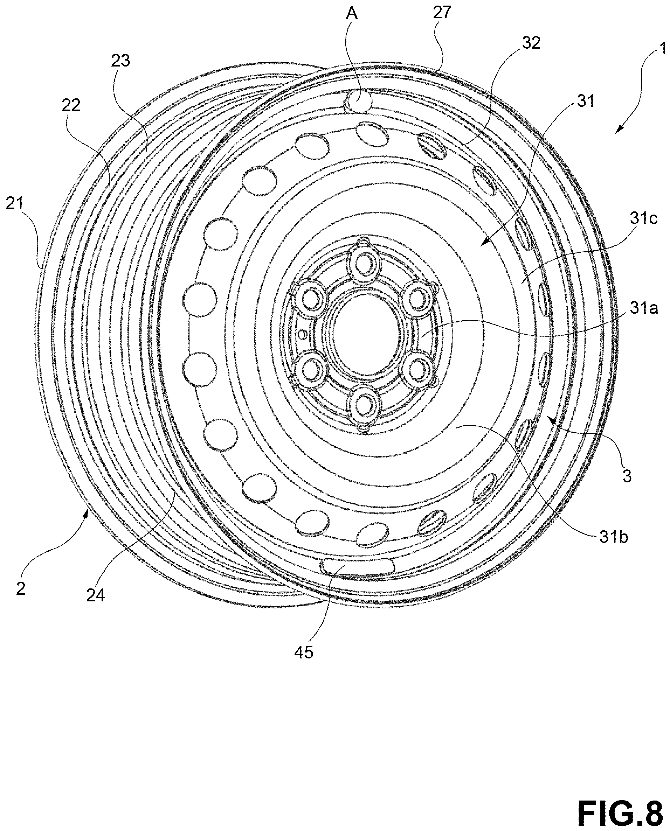

In the example in Fig. 8 the same wheel is again shown. The same numerical references as in the previous figures have therefore been adopted. In this example, there are no ribs, but rather a formation 45 of additive material deposited in a plurality of layers (in particular of metal material). Similar to the ribs described above, this formation defines a steep thickness change with respect to a surrounding region of sheet metal, and therefore defines localized thickening in well-defined regions. Said at least one formation may extend along any radial, circumferential and/or axial direction of the wheel, and may be located on an axially outer surface of the disc, an axially inner surface of the disc, a radially outer surface of the rim, and/or a radially inner surface of the rim.

In the example in Fig. 8, the formation 45 is made as a circumferentially extending strip arranged on the rim 2 at a position diametrically opposite to a mass A arranged at a valve hole of the wheel. The formation 45 has the function of balancing the mass A.

The additional thickness contributed by the ribs 41, 42, 43, 44 and by the formation 45 may be for example equal to or greater than 20% of the nominal thickness t of the sheet metal.

The aforesaid ribs and formation are obtained by any known additive manufacturing technique, and thus involve forming the rib layer by layer on the concerned region of the disc and/or rim. Examples of additive manufacturing techniques that may be used include, but are not limited to, three-dimensional printing, direct energy deposition, material extrusion, and powder bed fusion. The ribs and the aforesaid formation may be formed on the individual components of the wheel before they are assembled, or on the wheel once it is assembled.

## Claims

1. A wheel (1) for vehicles, comprising
a rim (2) of sheet metal, comprising on its axially outer side an outer flange (27), an outer bead seat (26) and a retaining hump (25), as well as a rim well (24) connected to the outer bead seat (26) through the retaining hump (25), and
a disc (3) of sheet metal, comprising a cover part (31) and a connection part (32) protruding axially from the cover part (31),
wherein the connection part (32) of the disc (3) is fixed to a radially inner surface of the rim (2),
**characterized in that** at least one formation (41, 42) of metal additive material deposited in a plurality of layers is formed on at least one of said rim and disc, said formation defining a steep thickness change with respect to a surrounding region of sheet metal.

2. The wheel according to claim 1, wherein said at least one formation comprises at least one rib of additive material deposited in a plurality of layers, said rib defining a steep thickness change with respect to a surrounding region of sheet metal.

3. The wheel according to claim 2, wherein said at least one rib comprises a plurality of ribs (41) of additive material extending radially.

4. The wheel according to claim 2 or 3, wherein said at least one rib comprises a rib (42) extending circumferentially.

5. The wheel according to any of claims 2 to 4, wherein said at least one rib comprises at least one rib arranged on an axially outer surface of the disc (3).

6. The wheel according to any of claims 2 to 5, wherein said at least one rib comprises at least one rib arranged on an axially inner surface of the disc (3).

7. The wheel according to any of claims 2 to 6, wherein said at least one rib comprises at least one rib arranged on a radially outer surface of the rim (2).

8. The wheel according to any of claims 2 to 7, wherein said at least one rib comprises at least one rib arranged on a radially inner surface of the rim (2).

9. The wheel according to any of claims 2 to 6, wherein said at least one rib is arranged in a region (31b) of the disc (3) comprised between a flat hub mounting part (31a) and the connection part (32).

10. The wheel according to any of claims 2 to 4, wherein said at least one rib extends from a region (31b) of the disc (3) comprised between a flat hub mounting part (31a) and the connection part (32) until a radially inner surface of the rim (2).

11. A method for producing a wheel for vehicles, comprising the following steps:
providing a rim (2) of sheet metal comprising on its axially outer side an outer flange (27), an outer bead seat (26) and a retaining hump (25), as well as a rim well (24) connected to the outer bead seat (26) through the retaining hump (25),
providing a disc (3) of sheet metal comprising a cover part (31) and a connection part (32) protruding axially from the cover part (31), and
fixing the connection part (32) of the disc (3) to a radially inner surface of the rim (2),
**characterized by** further comprising
forming at least one formation (41, 42) of metal material on at least one of said rim and disc by additive manufacturing, said formation defining a steep thickness change with respect to a surrounding region of sheet metal.
